# EUROPEAN PATENT SPECIFICATION

(11) **EP 3 961 568 B1**
(45) Date of publication and mention of the grant of the patent: **23.10.2024**
(21) Application number: 21162305.3
(22) Date of filing: 12.03.2021
(51) Int. Cl.: G06T 7/38

(54) **CROP GROWTH MEASUREMENT SYSTEM BASED ON CROP IMAGES, AND METHOD THEREOF**
NUTZPFLANZENWACHSTUMMESSSYSTEM AUF BASIS VON NUTZPFLANZENBILDERN UND VERFAHREN DAFÜR
SYSTÈME DE MESURE DE LA CROISSANCE DE CULTURES BASÉ SUR DES IMAGES DE CULTURES ET PROCÉDÉ CORRESPONDANT

(30) Priority: 25.08.2020 KR 20200107234
(43) Date of publication of application: 02.03.2022
(73) Proprietor: Korea Institute of Science and Technology, Seoul 02792 (KR)
(72) Inventor: LEE, Taeksung, 02792, Seoul, (KR); KIM, Hyoungseok, 25451, Gangneung-si, Gangwon-do, (KR); PARK, Soohyun, 25451, Gangneung-si, Gangwon-do, (KR); JHIN, Changho, 25451, Gangneung-si, Gangwon-do, (KR); YANG, Jungseok, 25451, Gangneung-si, Gangwon-do, (KR); LEE, Juyoung, 25451, Gangneung-si, Gangwon-do, (KR); NHO, Chuwon, 25451, Gangneung-si, Gangwon-do, (KR)
(74) Representative: advotec.

(56) References cited:
- STORY DAVID ET AL: "Design and implementation of a computer vision-guided greenhouse crop diagnostics system", MACHINE VISION AND APPLICATIONS, SPRINGER VERLAG, DE, vol. 26, no. 4, 19 March 2015 (2015-03-19), pages 495 - 506, XP035501560, ISSN: 0932-8092, [retrieved on 20150319], DOI: 10.1007/S00138-015-0670-5
- CHEN WEI-TAI ET AL: "An Automatic Plant Growth Measurement System for Plant Factory", 5TH IFAC SYMPOSIUM ON MODELLING AND CONTROL IN BIOMEDICAL SYSTEMS 2003, MELBOURNE, AUSTRALIA, 21-23 AUGUST 2003, vol. 46, no. 4, 1 January 2013 (2013-01-01), pages 323 - 327, XP055825400, ISSN: 1474-6670, DOI: 10.3182/20130327-3-JP-3017.00073

## Description

### [Technical Field]

The disclosure relates to a system and method for crop growth measurement, and more particularly to a system and method for crop growth measurement, which takes an image of a crop and processes the taken image to calculate a growth index of the crop based on the image.

### [Background Art]

With spread of a smart farm where information and communications technology (ICT) is grafted onto farming, technology of obtaining more accurate growth data for precise management and control according to growth stages based on data, and analyzing and processing the growth data has been actively developed.

For such precise control and management based on data, growth data of a crop should be continuously obtained. Instead of a conventional manually-measuring method by which a worker directly measures the stem thickness, growth in elongation, truss state, etc. of the crop, there has recently been universalized an image-based growth-index calculation method of obtaining an image through a camera or the like image taking device, processing the obtained image, and calculating various growth indexes of the crop.

Here, the method of obtaining the image of the crop includes a method of using a smartphone or a camera carried by a worker moving to obtain the image of the crop, and a method of using an image taking device stationarily installed to the inside of the smart farm. In this case, the method of allowing a worker who is moving to obtain images one by one is not only very cumbersome work but also has a negative effect on the growth of the crop or reproduction of a fruit due to physical contact between the worker and the crop.

Meanwhile, the method of using the stationary image taking device to obtain an image has a problem that it is difficult to identify a target crop, of which the growth index is desired to be calculated, through various image processing algorithms because an image is taken as the crop overlaps left and right adjacent crops or background crops due to the nature of a greenhouse where a lot of crops are cultivated in a narrow space. This problem should be solved in terms of calculating the growth index based on the image because it is directly related to the accuracy of the calculated growth index.

Such a problem caused by taking the image of many overlapped crops is soluble by a method of obtaining an image from many angles through a plurality of image taking devices. However, the plurality of image taking devices causes a cost burden on operation, and their practical use is not easy if the environment of the greenhouse where the crops are densely cultivated is taken into account.

Accordingly, there is a need of devising an image processing method that improves accuracy of a crop growth index calculated based on an image without using a plurality of cameras, a depth camera or the like expensive image taking device.

### [Related Art Document]

### [Patent Document]

(Patent Document 1) Korean Patent No. 10-1822410 (Jan 22, 2018) [Non-Patent Documents]
Story, David, and Murat Kacira. "Design and implementation of a computer vision-guided greenhouse crop diagnostics system. "Machine vision and applications 26.4 (2015): 495-506 discloses according to its abstract "*An autonomous computer vision-guided plant sensing and monitoring system was designed and constructed to continuously monitor temporal, morphological, and spectral features of lettuce crop growing in a nutrient film technique (NFT) hydroponics system*"*.*
Chen, Wei-Tai, et al. "An automatic plant growth measurement system for plant factory." IF AC Proceedings Volumes 46.4 (2013): 323-327 discloses according to its abstract "*an automatic plant growth measurement system, which is composed of a stereo vision system and a weight measurement system*"*.*

### [Disclosure]

### [Technical Problem]

The disclosure is conceived to solve the foregoing problems of the image-based crop growth measurement technology of the related art, and an aspect of the disclosure is to provide a crop growth measurement system based on crop images, which improves accuracy of a crop growth index calculated based on images without using a plurality of cameras, a depth camera or the like expensive image taking device, and a method thereof.

### [Technical Solution]

According to an embodiment of the disclosure, there is provided a crop growth measurement system for calculating a growth index of a crop based on crop images, including the features of independent claim 1.

Here, the image processor may be configured to connect the plurality of images in sequence to partially overlap the images of the target crop and be registered into the single image for the target crop, and a non-overlapped region with neighboring images may include a region corresponding to a certain number of pixels positioned along a moving direction of the image taker.

In this case, the number of pixels corresponding to the non-overlapped region between the neighboring images may be determined based a moving interval of the image taker and a distance between the image taker and the target crop, and the number of pixels corresponding to the non-overlapped region between the images may be in inverse proportion to the distance between the image taker and the target crop.

Further, the crop growth measurement system includes an image-taking controller configured to determine a number of images of to be obtained by the image taker and a moving interval of the image taker based on the number of images to be obtained, based on information about a distance between the target crop and a background crop of the target crop.

Here, the number of images to be obtained is in inverse proportion to the distance between the background crop and the target crop.

According to another embodiment of the disclosure, there is provided a crop growth measurement method of calculating a growth index of a crop based on crop images, including the features of independent claim 5.

In this case, the crop growth measurement method may further include, by the processor, calculating the growth index of the target crop based on the single registration image for the target crop.

### [Advantageous Effects]

By the crop growth measurement system according to the present disclosure, it is possible to calculate growth index of crops accurately based on images without using a plurality of cameras, a depth camera or the like expensive image taking device.

Furthermore, according to the disclosure, the target crop of which the growth index is desired to be calculated is easily identified from a taken image, and thus an image processing load for background removal, etc. is largely reduced at image-based growth index calculation, thereby efficiently operating computing resources and improving a processing speed.

### [Description of Drawings]

The above and/or other aspects will become apparent and more readily appreciated from the following description of embodiments, taken in conjunction with the accompanying drawings, in which:
FIG. 1 is a block diagram schematically illustrating a configuration of a crop growth measurement system according to an embodiment of the disclosure;
FIG. 2 shows an example of images of a target crop, which are successively taken by a moving image taker according to an embodiment of the disclosure;
FIG. 3 is a reference view for explaining an example of registering a plurality of images into a single image by an image processor according to an embodiment of the disclosure;
FIGS. 4 to 6 show examples of change in image position based on an image formation theory of a lens when a camera moves up and down with respect to a target crop;
FIG. 7 synthetically shows individual positions of images corresponding to a plurality of camera positions;
FIG. 8 is a reference view for explaining an example of registering images corresponding to a plurality of camera positions;
FIG. 9 shows an example of an image registered by an image processor according to an embodiment of the disclosure;
FIG. 10 is a reference view for comparison among registration results according to the number of images used in registration; and
FIG. 11 is a flowchart showing a crop growth measurement method according to an embodiment of the disclosure.

### [Best Mode]

A crop growth measurement system according to the disclosure takes images of a crop and processes the taken images to thereby calculate a growth index of the crop. The image processing performed by the crop growth measurement system according to the disclosure includes not only a process of calculating the growth index of the crop, but also an overall process of preprocessing the taken images to calculate the growth index.

Below, exemplary embodiments of the disclosure will be described with reference to the accompanying drawings. However, details of the publicly know functions or configurations, which may cloud the gist of the disclosure, will be omitted from the following descriptions and the accompanying drawings. Further, if possible, like numerals refer to like elements throughout the accompanying drawings.

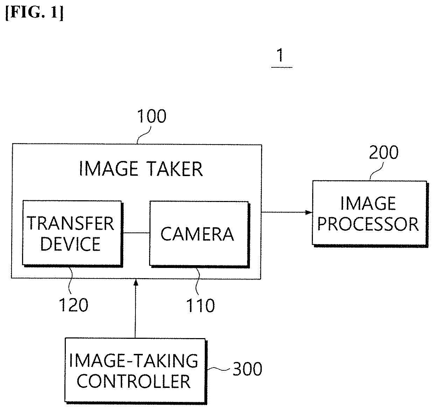

FIG. 1 is a block diagram schematically illustrating a configuration of a crop growth measurement system according to an embodiment of the disclosure.

Referring to FIG. 1, a crop growth measurement system 1 according to an embodiment of the disclosure includes an image taker 100, an image processor 200, and an image-taking controller 300.

The image taker 100 obtains a plurality of images of a target crop, of which a growth index is desired to be calculated, according to different positions, while moving at preset moving intervals in a preset moving direction. To this end, the image taker 100 may include a camera 110 used for taking a crop image, and a transfer device 120 mounted with the camera 110 and moving the camera 110 up and down at a predetermined speed. Here, the camera 110 is not limited to a specific piece of equipment, but may employ various types and kinds of red, green and blue (RGB) cameras such as a charge-coupled device (CCD) camera, a complementary metal-oxide semiconductor (CMOS) camera, etc.

Further, the transfer device 120 is not limited to a specific structure as long as it can move the camera 110 up and down. For example, the transfer device 120 may include an elevation rail, a slider to which the camera 110 is mounted, a driving motor for moving the slider up and down along the elevation rail, etc.

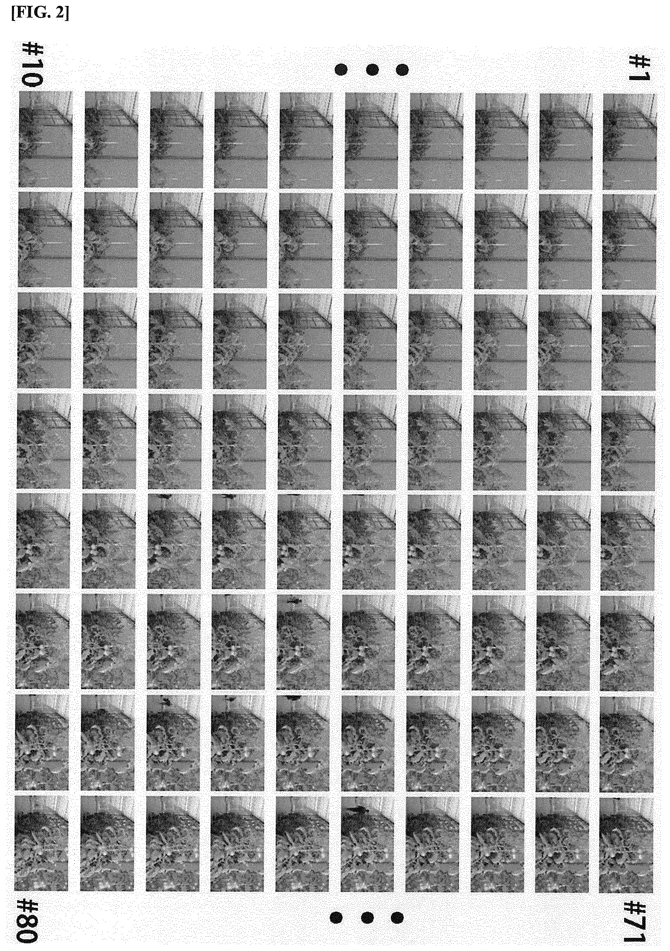

FIG. 2 shows images of a target crop, which are successively taken as the image taker according to an embodiment of the disclosure moves from top to bottom, and for example shows eighty obtained images.

Like this, the camera 110 of the image taker 100 takes images of the target crop at preset positions while moving up and down along the elevation rail of the transfer device 120. For reference, FIG. 2 shows an example that the images are taken with movement from top to bottom, but, alternatively, images may also be taken with movement from bottom to top.

The image processor 200 registers a plurality of images of a target crop, which are obtained by the image taker 100 according to different positions, into a single image for the target crop. The image processor 200 may include a communication module for receiving the images taken by the image taker 100, a processor with an algorithm for processing the plurality of images to be registered into the single image, a user interface such as a keyboard, a mouse, etc. to receive various pieces of information from a user, a display for displaying a registration result, etc.

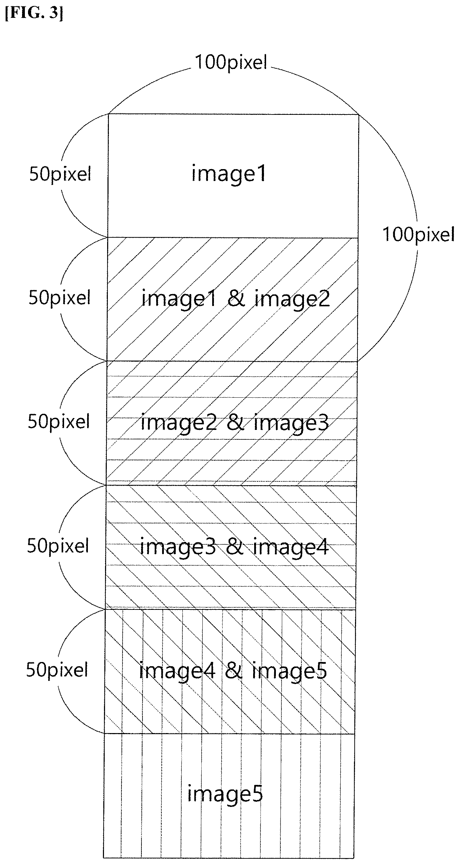

FIG. 3 is a view for explaining a method of registering a plurality of images, which are taken and obtained at different positions, i.e. different heights, into a single by the image processor 200 according to an embodiment of the disclosure. For reference, FIG. 3 shows a case of registering five images 1 to 5 on the assumption that the images 1 to 5 are obtained in sequence from top to bottom.

The image processor 200 sequentially connects the plurality of images so that each of the images of the target crop is partially overlapped with its neighboring images, thereby registering the plurality of images into the single image with regard to the target crop. In this case, a non-overlapped region, which does not overlap with a neighboring image, is a region corresponding to a certain number of pixels positioned along the moving direction of the image taker 100.

Referring to FIG. 3, when it is assumed that each image has 100 X 100 pixels, neighboring images overlap each other by 50 pixels, thereby registering five images into a single image. According to this example, to register the plurality images into a single image, the image processor 200 connects a plurality of images in sequence starting from the image 1 taken at the top so that the images are spaced apart at intervals of 50 pixels in a downward direction, i.e. the moving direction of the image taker 100. For example, the image 2 is connected to a position spaced apart by 50 pixels from the starting position of the image 1 in the downward direction, and the image 3 is connected to a position spaced apart by 50 pixels again from the position to which the image 2 is connected. Like this, the plurality of images are registered into the single image by connecting in sequence so that the regions, which do not overlap their posterior neighboring images, correspond to a certain number of pixels positioned along the moving direction of the image taker 100.

Meanwhile, the foregoing images of FIG. 3 are spaced apart at intervals of 50 pixels, but this is merely an example. Alternatively, the spacing interval, i.e. the number of pixels corresponding to the non-overlapped region between the neighboring images may be varied as necessary. For example, the number of pixels corresponding to the non-overlapped region between the neighboring images may be varied depending on the moving interval of the image taker 100 and a distance between the image taker 100 and the target crop.

The number of pixels corresponding to the space between the neighboring images, i.e. the number of pixels corresponding to the non-overlapped region is in inverse proportion to the distance between the image taker 100 and the target crop. For example, when it is assumed that the images have the same size, the spacing pixel interval becomes larger as the distance between the image taker 100 and the target crop decreases, but smaller as the distance increases. On the other hand, the number of pixels corresponding to the non-overlapped regions is in proportion to the moving interval of the image taker 100. In other words, the number of non-overlapped pixels increases when the moving interval of the image taker 100 becomes larger, but the number of non-overlapped pixels decreases when the moving interval of the image taker 100 becomes smaller.

For reference, the distance between the image taker 100 and the target crop may be directly input by a user through the user interface (not shown) or may be based on a preset value. For example, on the assumption that the images are taken while the transfer device 120 moves along the rail or line installed inside the smart farm, and the crops in the smart farm are planted in a standardized space, it is general that the rail (or line) inside the smart farm keeps a certain distance from the space in which the crops are planted, and therefore the distance between the rail and the crop planting space may be previously measured and set as an input value. Alternatively, a distance measuring sensor for measuring the distance may be mounted to the image taker 100 to thereby identify the distance between the image taker 100 and the target crop through distance sensing. Meanwhile, the moving interval of the image taker 100 may be identified based on a control value or a set value of the image taker 100.

As described above, when the images obtained at each different position are connected in sequence to be registered into a single image, a region of interest (ROI) in the obtained image, i.e. the target crop of which the growth index is desired to be calculated becomes clear in the registered image. On the other hand, the region other than the target crop is different in a position of a focal plane from the ROI and thus registration planes are discontinuously formed, thereby having an effect on making it difficult to identify the background other than the target crop. Therefore, the target crop is distinguished from the background and thus easily recognizable in the registration image without any separate image process for removing the background.

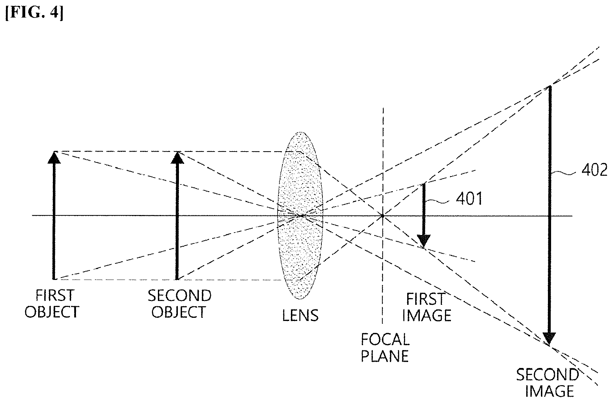

FIGS. 4 to 8 are reference views for explaining a technical principle of image registration based on the image processor 200 according to an embodiment of the disclosure.

First, referring to FIGS. 4 to 6, an image position is changed based on an image formation theory of a lens when the camera 110 moves up and down with respect to the target crop.

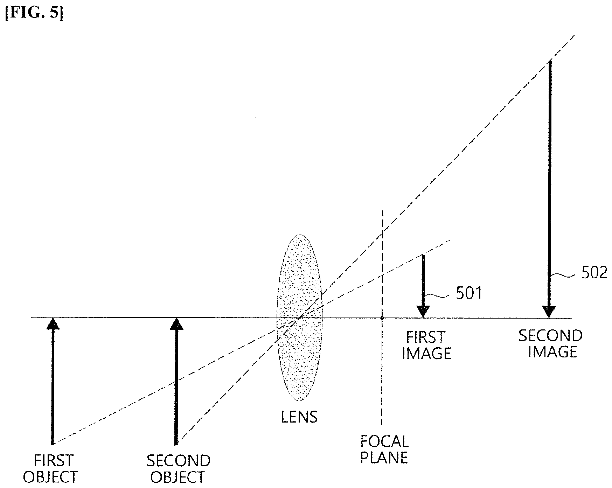

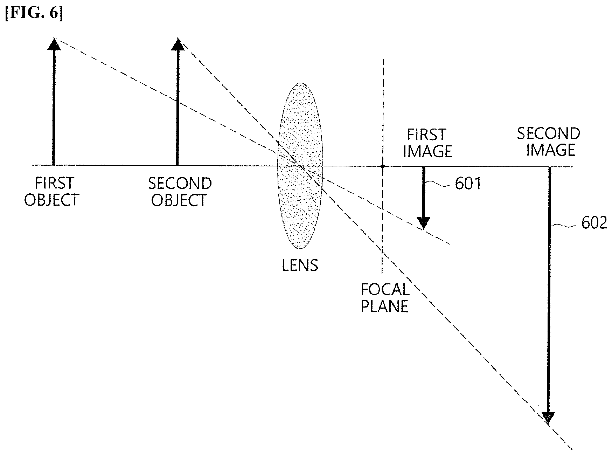

FIG. 5 shows the image position when the camera 110 moves in an upward direction of the target crop as compared with the position of the camera 110 in FIG. 4. Referring to FIG. 5, a first image 501 and a second image 502 respectively corresponding to a first object and a second object are formed at an upper side as compared with the positions of the images 401, 402 in FIG. 4. On the other hand, when the camera 110 moves in a downward direction of the target crop as shown in FIG. 6, the first image 601 and the second image 602 are formed at a lower side as compared with the positions of the images 401, 402 in FIG. 4.

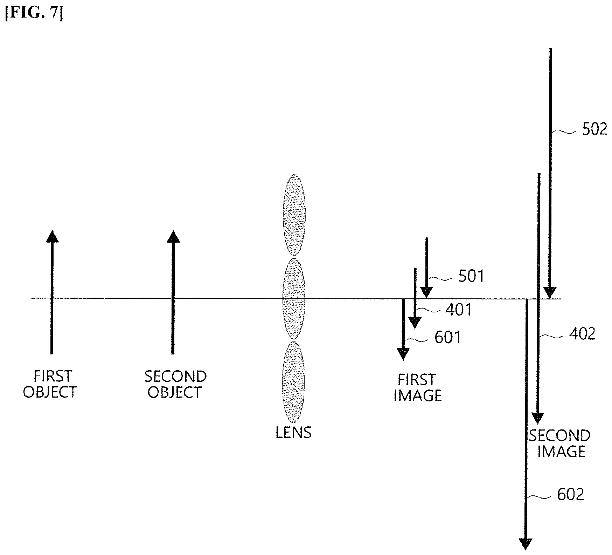

FIG. 7 synthetically shows individual positions of the first images 401, 501, 601 and the second images 402, 502, 602 corresponding to the positions of the camera 110 in FIGS. 4 to 6, in which the images are varied in position as the position of the camera 110 is changed with respect to the position of the target crop.

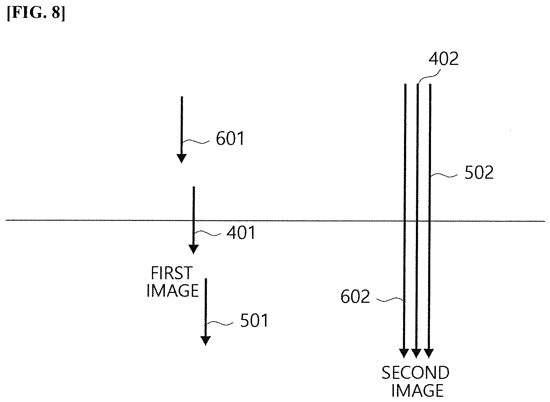

The images formed at the different positions are needed to be aligned as shown in FIG. 8 so as to register the plurality of images, obtained at different positions as described with reference to FIGS. 4 and 7 while the image taker 100 is moving with respect to the target crop, into a single image. For reference, in FIG. 8, the second object corresponds to the target crop of which the growth index is desired to be calculated, and the first object corresponds to the background crop behind the second object.

As shown in FIG. 8, when the image registration is performed with respect to the second object corresponding to the target crop, the registration planes of the first images 401, 501, 601 according to the plurality of positions corresponding to the first object are not aligned with one another, and therefore the background crop corresponding to the first object is easily distinguished from the target crop corresponding to the ROI in the registration image registered by the image processor 200.

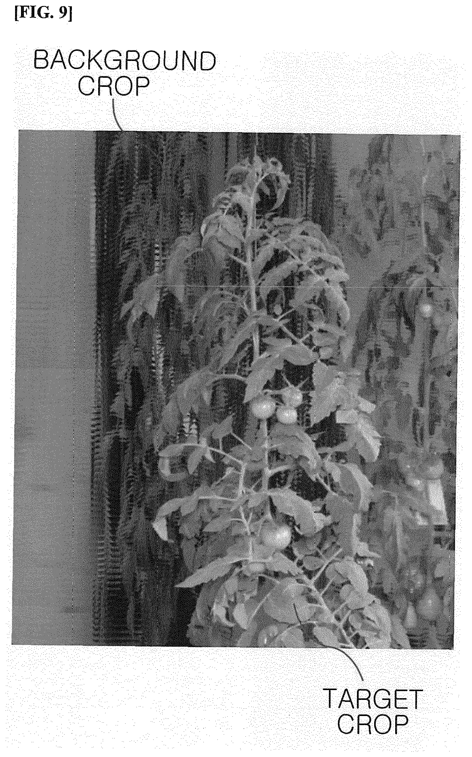

FIG. 9 shows an example of the image registered by the image processor 200 according to an embodiment of the disclosure, in which the eighty images shown in FIG. 2 are registered into the single image with respect to the target crop.

Referring to FIG. 9, the target crop placed relatively ahead is clearly distinguishable in the registered image, while the background crop, which is placed relatively behind as the registration is carried out with respect to the target crop, is hardly distinguishable as a whole object because its registration planes are discontinuously formed and looks cracked. Therefore, when the growth index of the crop is calculated based on an image, the growth index of the target crop can be accurately calculated without a separate image processing for background removal.

However, in this case, it is difficult to distinguish between the target crop and the background crop when the images used in the registration are too few. On the other hand, when the number of images reaches a certain threshold, there is no significant change in effectiveness even though the number of images increases and therefore the increase in the number of images for registration is not useful.

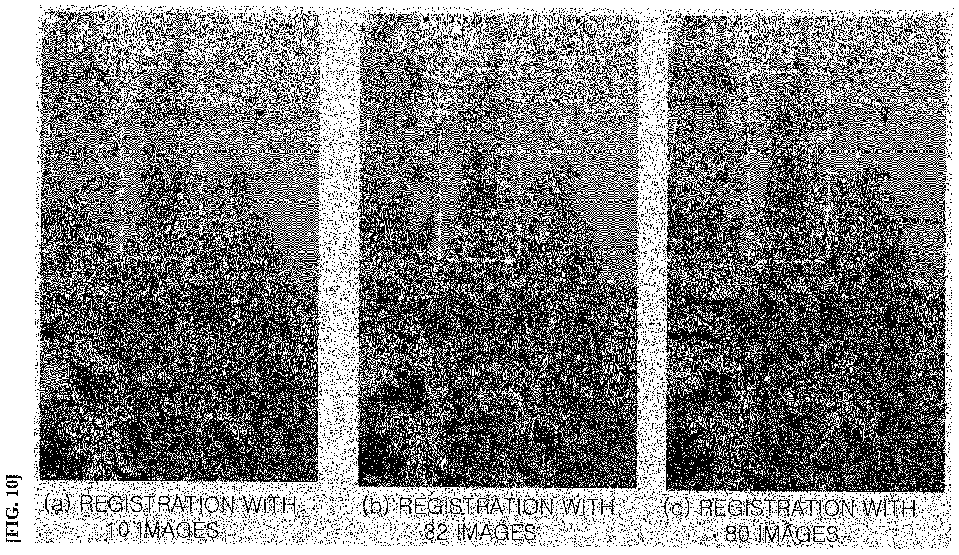

FIG. 10 is a reference view for comparison among registration results according to the number of images. Referring to FIG. 10, on the assumption that the height of the target crop is about 1500cm, the distance between the camera and the front target crop is about 60cm, and the distance between the front target crop and the background crop is about 80cm, distinguishability between the target crop and the background crop is varied depending on the number of images used in the registration.

In FIG. 10, (a) shows the registration with 10 images, (b) shows the registration with 32 images, and (c) shows the registration with 80 images. Referring to FIG. 10, it is not easy to distinguish between the front target crop and the background crop when the registration is performed based on 10 images, but it becomes easier to identify the target crop due to the discontinuously formed registration plane of the background crop as the number of images increases.

According to the disclosure, the crop growth measurement system 1 is aimed at distinguishing between the target crop and the other background through the image registration, and needs to determine an optimum number of obtaining images.

Thus, the image-taking controller 300 determines the number of images to be obtained by the image taker 100 and the moving interval of the image taker 100 according to the number of images to be obtained based on information about a distance between the target crop and the background crop placed behind the target crop, and controls the image taker 100 according to the determined results.

Here, the number of images to be obtained by the image taker 100 is in inverse proportion to the distance between the background crop and the target crop. In other words, the image-taking controller 300 may set a relatively small number of images to be obtained when the background crop is far away from the target crop, but set a relatively large number of images to be obtained when the background crop is close to the target crop. This is because as the distance between the target crop and the background crop increases, difference in positions of the registration planes between the two crops becomes greater. Therefore, the target crop is easily distinguishable from the background crop even though fewer images are registered with respect to the target crop.

Meanwhile, under the condition that the crops have the same height, the moving interval of the image taker 100 is set to be smaller when the number of images to be obtained increases, but set to be larger when the number of images to be obtained decreases.

For reference, the distance between the target crop and the background crop may be directly input by a user, or may, as described above, apply a value previously set based on information about a crop planting space of the smart farm because it is general that the crops in the smart farm are planted in a previously standardized space at predetermined intervals.

Meanwhile, the image-taking controller 300 may additionally take the height of the target crop into account when the number of images to be obtained and the moving interval of the image taker 100 are set. For example, the number of images to be obtained may increase when the target crop becomes higher. Here, the height of the target crop may be input by a user, or may apply the height of the crop calculated based on previously stored growth graph data in which degrees of change in the height of the crops are recorded according to the kinds of crops and the seasons.

As described above, in order to determine the number of images to be obtained and an optimum moving interval of the image taker 100 based on the determined number of images, the image-taking controller 300 stores a data table in which the optimum numbers of images to be obtained are matched with the optimum moving intervals of the image taker 100 based on the distance between the target crop and the background crop and the height of the crop according to a plurality of cases, and loads the number of images to be obtained and the moving interval of the image taker 100 which are matched to a setting value from the data table based on the setting value input by a user or suitable for the smart farm, thereby controlling the image taker 100 with loaded values. However, when the correctly matched distance between the target crop and the background crop or the correctly matched height of the crop is not present in the data table, an interpolation algorithm may be used to calculate the optimum number of images to be obtained and the moving interval of the image taker 100.

Further, aside from the data table, a model for calculating the number of images to be obtained may be previously stored. The model defines a relationship among the distance between the target crop and the background crop, the height of the crop, and the number of images to be obtained. The model may be a functional formula using the distance between the target crop and the background crop and the height of the crop as independent variables and using the number of images to be obtained as a dependent variable. The number of images to be obtained can be calculated by inputting a distance value between the crops and a height value into the model.

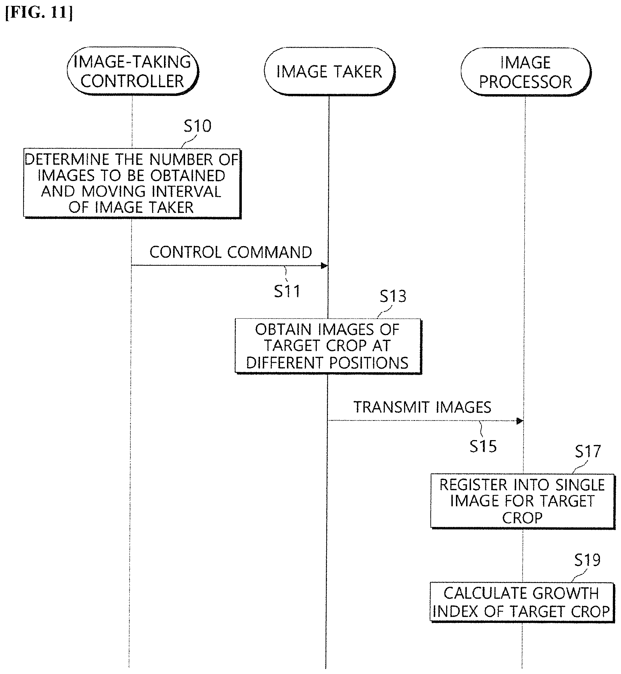

Further, FIG. 11 is a flowchart showing a crop growth measurement method according to an embodiment of the disclosure. Below, organic operations of elements in the crop growth measurement system 1 will be described with reference to FIG. 11.

First, the image-taking controller 300 determines a proper number of images to be obtained and a corresponding moving interval of the image taker 100 based on the distance between the target crop of which the growth index is desired to be calculated and the background crop, the height of the target crop, etc., and transmits a control command based on the determination to the image taker 100 (steps S10 and S11). In this case, the image-taking controller 300 may determine the optimum number of images to be obtained and the moving interval based on a user's input value or a preset value, a previously stored data table, a functional formula, etc.

The image taker 100 obtains the plurality of images of the target crop at different positions while moving at predetermined intervals with respect to the target crop under control of the image-taking controller 300 (step S13).

The image processor 200 corresponding to the processor receives the plurality of images taken at different positions by the image taker 100, and registers the received images into a single image for the target crop (steps S15 and S17). As described above, the image processor 200 connects the plurality of images in sequence to partially overlap the images of the target crop, thereby registering into the single image of the target crop. For reference, communication between the image taker 100 and the image processor 200 may be based on Bluetooth, Wi-Fi, Long Range (LoRa) or the like various publicly known wired/wireless communication methods without being limited to a specific communication method.

The image processor 200 calculates the growth index of the target crop based on the registered image (step S19). Here, the growth index of the crop refers to an index of indicating a growth status or a growth level of the crop involving vegetative growth and reproductive growth, which includes the height of the crop, a location of a blooming peduncle or truss, a stem thickness around the blooming peduncle or truss, the number of blade nodes, a leaf area index, a fruit size, etc. Here, the term of truss means a group or cluster of smaller stems where flowers and fruit develop. The growth index may be calculated by machine learning and deep learning based on a convolutional neural network (CNN), a recurrent neural network (RNN), you only look once (YOLO) or the like algorithm. Besides, various publicly known image recognition and process algorithms may be used.

As described above, by a crop growth measurement system and method according to the disclosure, a target crop of which a growth index is desired to be calculated is easily identified based on a registered image without using a plurality of cameras, a depth camera or the like expensive image taking device, thereby largely reducing an image processing load for background removal, etc. at image-based growth index calculation, and accurately calculating the growth index of the crop based on the registered image.

In the foregoing description, all elements according to an embodiment of the disclosure are combined or operate as combined, but the disclosure is not limited to this embodiment. In other words, within the scope of the disclosure, one or more among all the elements may be selectively combined and operate. Further, each of all the elements may be embodied as independent hardware, but some or all of the elements may be selectively combined and embodied as a computer program having a program module for implementing some or all functions combined in one or a plurality of hardware components. The codes and code segments of the computer program may be easily inferred by those skilled in the art. Such a computer program may be stored in a computer readable media and read and executed by a computer to thereby implement the embodiments of the disclosure. The media of the computer program may include a magnetic recording medium, an optical recording medium, etc.

Further, the terms "comprise", "include", "have" or the like mean that corresponding elements may be included unless otherwise mentioned, and thus construed as not excluding but including other elements. Unless otherwise defined, all terms including technical or scientific terms have the same meanings as generally understood by a person having ordinary knowledge in the field of the art to which the disclosure pertains. Terms generally used like terms defined in a dictionary should be interpreted to coincide with the contextual meaning of the related art, and shall not be construed in an ideal or excessively formal sense unless explicitly defined in the disclosure.

The foregoing descriptions are merely for illustrative purpose only, and various modifications and changes can be made by those skilled in the art without departing from the essential characteristics of the disclosure. Therefore, the embodiments of the disclosure are not intended to limit the technical idea of the disclosure but to describe the disclosure, and the scope of disclosure is not limited by these embodiments. The scope of the disclosure should be interpreted by the following claims.

## Claims

1. A crop growth measurement system for calculating a growth index of a crop based on crop images, comprising:
an image taker (100) configured to obtain a plurality of images of a target crop at different positions while moving up and down at preset intervals with respect to the target crop of which the growth index is desired to be calculated;
an image processor (200) configured to register the plurality of images of the target crop at the different positions into a single image for the target crop, and
an image-taking controller (300) configured to determine a number of images to be obtained by the image taker (100) and a moving interval of the image taker (100) based on the number of images to be obtained, based on information about a distance between the target crop and a background crop which is placed relatively behind the target crop,
wherein the image-taking controller (300) determines so that the number of images to be obtained is in inverse proportion to the distance between the background crop and the target crop.

2. The crop growth measurement system according to claim 1, wherein the image processor (200) is configured to connect the plurality of images in sequence to partially overlap the images of the target crop so as to register the plurality of images into the single image for the target crop, and a non-overlapped region with neighboring images comprises a region corresponding to a certain number of pixels positioned along a moving direction of the image taker (100).

3. The crop growth measurement system according to claim 2, wherein the number of pixels corresponding to the non-overlapped region between the neighboring images is determined based on a moving interval of the image taker (100) and a distance between the image taker (100) and the target crop.

4. The crop growth measurement system according to claim 3, wherein the number of pixels corresponding to the non-overlapped region between the images is in inverse proportion to the distance between the image taker (100) and the target crop.

5. A crop growth measurement method of calculating a growth index of a crop based on crop images, comprising:
by an image-taking controller (300), determining a number of images to be obtained by an image taker (100) and a moving interval of the image taker (100) based on the number of images to be obtained, based on information about a distance between a target crop of which the growth index is desired to be calculated and a background crop which is placed relatively behind the target crop;
by the image taker (100), obtaining a plurality of images of the target crop at different positions while moving up and down at preset intervals with respect to the target crop under control of the image-taking controller (300); and
by a processor (200), registering the plurality of images of the target crop at the different positions into a single image for the target crop,
wherein the image-taking controller (300) determines so that the number of images to be obtained is in inverse proportion to the distance between the background crop and the target crop.

6. The crop growth measurement method according to claim 5, further comprising, by the processor (200), calculating the growth index of the target crop based on the single registration image for the target crop.

## Patentansprüche

1. Nutzpflanzenwachstumsmesssystem zur Berechnung eines Wachstumsindex einer Nutzpflanze anhand von Nutzpflanzenbildern, umfassend:
eine Bildaufnahmeeinrichtung (100) zur Aufnahme einer Vielzahl von Bildern einer Zielnutzpflanze in unterschiedlichen Positionen unter Auf- und Abbewegung in vorbestimmten Intervallen relativ zu der Zielnutzpflanze, deren Wachstumsindex berechnet werden soll;
eine Bildverarbeitungseinrichtung (200) zur Erfassung der Vielzahl von Bildern der Zielnutzpflanze in den unterschiedlichen Positionen in einem Einzelbild für die Zielnutzpflanze, und
eine Bildaufnahmesteuerung (300) zur Bestimmung einer Anzahl an durch die Bildaufnahmeeinrichtung (100) aufzunehmenden Bildern und eines Bewegungsintervalls der Bildaufnahmeeinrichtung (100) auf Basis der Anzahl an aufzunehmenden Bildern, und zwar auf Basis von Informationen zu einem Abstand zwischen der Zielnutzpflanze und einer Hintergrundnutzpflanze, die sich relativ hinter der Zielnutzpflanze befindet,
wobei die Bestimmung durch die Bildaufnahmesteuerung (300) derart erfolgt, dass die Anzahl an aufzunehmenden Bildern umgekehrt proportional zu dem Abstand zwischen der Hintergrundnutzpflanze und der Zielnutzpflanze ist.

2. Nutzpflanzenwachstumsmesssystem nach Anspruch 1, wobei die Bildverarbeitungseinrichtung (200) dazu ausgebildet ist, die Vielzahl von Bildern der Reihe nach zu verbinden, um die Bilder der Zielnutzpflanze teilweise zu überlappen und die Vielzahl von Bildern so in dem Einzelbild für die Zielnutzpflanze zu erfassen, und ein nicht mit benachbarten Bilden überlappender Bereich einen Bereich umfasst, der einer bestimmten Anzahl an entlang einer Bewegungsrichtung der Bildaufnahmeeinrichtung (100) angeordneten Pixeln entspricht.

3. Nutzpflanzenwachstumsmesssystem nach Anspruch 2, wobei die dem nicht überlappenden Bereich zwischen den benachbarten Bildern entsprechende Anzahl an Pixeln auf Basis eines Bewegungsintervalls der Bildaufnahmeeinrichtung (100) und eines Abstands zwischen der Bildaufnahmeeinrichtung (100) und der Zielnutzpflanze bestimmbar ist.

4. Nutzpflanzenwachstumsmesssystem nach Anspruch 3, wobei die dem nicht überlappenden Bereich zwischen den Bildern entsprechende Anzahl an Pixeln umgekehrt proportional zu dem Abstand zwischen der Bildaufnahmeeinrichtung (100) und der Zielnutzpflanze ist.

5. Nutzpflanzenwachstumsmessverfahren zur Berechnung eines Wachstumsindex einer Nutzpflanze anhand von Nutzpflanzenbildern, umfassend:
Bestimmen einer Anzahl an durch eine Bildaufnahmeeinrichtung (100) aufzunehmenden Bildern und eines Bewegungsintervalls der Bildaufnahmeeinrichtung (100) auf Basis der Anzahl an aufzunehmenden Bildern, und zwar auf Basis von Informationen zu einem Abstand zwischen der Zielnutzpflanze, deren Wachstumsindex berechnet werden soll, und einer Hintergrundnutzpflanze, die sich relativ hinter der Zielnutzpflanze befindet, mittels einer Bildaufnahmesteuerung (300);
Aufnehmen einer Vielzahl von Bildern der Zielnutzpflanze in unterschiedlichen Position unter Auf- und Abbewegung in vorbestimmten Intervallen relativ zu der Zielnutzpflanze mittels der Bildaufnahmeeinrichtung (100), gesteuert durch die Bildaufnahmesteuerung (300), und
Erfassen der Vielzahl von Bildern der Zielnutzpflanze in den unterschiedlichen Positionen in einem Einzelbild für die Zielnutzpflanze mittels einer Verarbeitungseinrichtung (200),
wobei die Bestimmung durch die Bildaufnahmesteuerung (300) derart erfolgt, dass die Anzahl an aufzunehmenden Bildern umgekehrt proportional zu dem Abstand zwischen der Hintergrundnutzpflanze und der Zielnutzpflanze ist.

6. Nutzpflanzenwachstumsmessverfahren nach Anspruch 5, des Weiteren umfassend ein Berechnen des Wachstumsindex der Zielnutzpflanze auf Basis des Einzelerfassungsbilds für die Zielnutzpflanze mittels der Verarbeitungseinrichtung (200).

## Revendications

1. Système de mesure de croissance de cultures pour calculer un indice de croissance d'une culture à la base d'images de cultures, comprenant :
un preneur d'images (100) configuré pour obtenir une pluralité d'images d'une culture cible dans des positions différentes tout en montant et descendant à intervalles prédéfinis par rapport à la culture cible dont l'indice de croissance doit être calculé ;
un processeur d'images (200) configuré pour enregistrer la pluralité d'images de la culture cible dans les positions différentes dans une seule image pour la culture cible, et
un contrôleur de prise d'images (300) configuré pour déterminer un nombre d'images à être obtenues par le preneur d'images (100) et un intervalle de déplacement du preneur d'images (100) sur la base du nombre d'images à obtenir, sur la base d'informations sur une distance entre la culture cible et une culture de fond qui est située relativement derrière la culture cible,
dans lequel la détermination par le contrôleur de prise d'images (300) s'effectue de telle manière que le nombre d'images à obtenir est inversement proportionnel à la distance entre la culture de fond et la culture cible.

2. Système de mesure de croissance de cultures selon la revendication 1, dans lequel le processeur d'images (200) est configuré pour relier séquentiellement la pluralité d'images de sorte que les images de la culture cible se chevauchent partiellement afin d'enregistrer la pluralité d'images dans la seule image pour la culture cible, et une région non chevauchée avec des images adjacentes comprend une région correspondant à un certain nombre de pixels positionnés le long d'une direction de déplacement du preneur d'images (100).

3. Système de mesure de croissance de cultures selon la revendication 2, dans lequel le nombre de pixels correspondant à la région non chevauchée entre les images adjacentes est déterminé sur la base d'un intervalle de déplacement du preneur d'images (100) et d'une distance entre le preneur d'images (100) et la culture cible.

4. Système de mesure de croissance de cultures selon la revendication 3, dans lequel le nombre de pixels correspondant à la région non chevauchée entre les images est inversement proportionnel à la distance entre le preneur d'images (100) et la culture cible.

5. Procédé de mesure de croissance de cultures pour calculer un indice de croissance d'une culture à la base d'images de cultures, comprenant :
par un contrôleur de prise d'images (300), déterminer un nombre d'images à être obtenues par un preneur d'images (100) et un intervalle de déplacement du preneur d'images (100) sur la base du nombre d'images à obtenir, sur la base d'informations sur une distance entre une culture cible dont l'indice de croissance doit être calculé et une culture de fond qui est située relativement derrière la culture cible ;
par le preneur d'images (100), obtenir une pluralité d'images d'une culture cible dans des positions différentes tout en montant et descendant à intervalles prédéfinis par rapport à la culture cible sous le contrôle du contrôleur de prise d'images (300) ; et
par un processeur (200), enregistrer la pluralité d'images de la culture cible dans les positions différentes dans une seule image pour la culture cible,
dans lequel la détermination par le contrôleur de prise d'images (300) s'effectue de telle manière que le nombre d'images à obtenir est inversement proportionnel à la distance entre la culture de fond et la culture cible.

6. Procédé de mesure de croissance de cultures selon la revendication 5, comprenant en outre l'étape consistant à, par le processeur (200), calculer l'indice de croissance de la culture cible sur la base de la seule image d'enregistrement pour la culture cible.
